# EUROPEAN PATENT APPLICATION

(11) **EP 1 536 133 A1**
(43) Date of publication of application: **01.06.2005**
(21) Application number: 04105257.2
(22) Date of filing: 22.10.2004
(51) Int. Cl.: F03B 3/18

(54) **Torque limiting wicket gate operating mechanism for a water turbine**

(30) Priority: 26.11.2003 SE 3031689
(71) Applicant: GE Energy (Sweden) AB, 681 29 Kristinehamn (SE)
(72) Inventor: LAGERBERG, Bengt, 656 72 SKATTKÄRR (SE)
(74) Representative: Johansson, Lars E.

(57) **Abstract**

The invention relates to a wicket gate for a water turbine 1. The wicket gate comprises a regulating ring 4, a guide-vane 5 and a crank 6 that is fixedly connected with the guide-vane 5. A two-part link 7 is arranged between the crank 6 and the regulating ring 4, which two-part link in one end thereof is mounted to the crank 6 of the guide-vane 5, and in its other end is rotatably mounted to the regulating ring 4. A toggle joint on the two-part link 7 is provided with biased friction members 13, 14, that are able to transfer a torque of up to a predetermined level.

## Description

### TECHNICAL FIELD

The present invention relates to a wicket gate for a water turbine, which wicket gate is provided with guide-vanes that can be set by turning to control the water flow to the turbine.

### BACKGROUND OF THE INVENTION

At operation of a water turbine, water to the turbine can pass through a wicket gate with adjustable guide-vanes. The water flow to the turbine can be controlled by setting the guide-vanes. The water flow can also be shut-off totally by the guide-vanes being pivoted to a completely closed position. It may happen that a guide-vane is restricted from pivoting if an obstruction enters between two guide-vanes. If one of the guide-vanes is restricted in its travel during adjustment, practically the entire adjusting power for the wicket gate is transferred to the restricted guide-vane. The guide-vane and/or its regulating mechanism may then be damaged. Therefore, varying types of safety devices have been used in order to avoid damages on the guide-vane and its regulating mechanism. A type of safety mechanism often used in this connection, is breaking links or breaking bolts that break at a predetermined load. However, breaking links and breaking bolts have some disadvantages. Among other things, the replacement of broken links or bolts is time-consuming and may require total shut-off of the turbine during the replacement. Moreover, there is a risk that the turbine may experience avalanche-closing. Avalanche-closing is a phenomenon that may occur in connection with the breaking of a breaking link or a breaking bolt. The load that was mainly applied on the broken link or bolt, may namely be unequally transferred to the regulating mechanisms of the other guide-vanes, leading to sequential breaking of the breaking links or bolts. When all links or bolts break, the entire wicket gate will be closed very quickly, since the guide-vanes normally are designed such that they are affected by the water flow all the time to move towards their closed position. A controlled closing may take place in about 6-8 seconds, but an avalanche-closing may take place considerably quicker. If closing of the wicket gate is very fast, a wicket gate upstream overpressure and a wicket gate downstream underpressure may result. Such an underpressure may in turn result in a backlash, as wicket gate and turbine downstream water flows backwards violently. This may result in serious damage to the turbine and/or the wicket gate.

In US patent no. 3,030,072, it has been suggested that the maximum torque that can be transferred in a wicket gate is limited by arranging upper and lower friction discs between the guide-vane and its crank or lever. If a guide-vane encounters an obstruction causing the resistance to pivoting to exceed a predetermined value, the lever will move in relation to the friction discs and the guide-vane.

Another solution is suggested in GB 989 828. In that reference, it is shown how a guide-vane is arranged on a lever. A safety link is pivotally secured to a swivelling pin on the lever. The safety link comprises two link halves. The two link halves are pivotally connected by a bolt. The ends of the link halves are provided with coupling bolts, and between the coupling bolts there is a compressible and resilient member. The resilient member comprises cup springs carried on a bolt. The device is said to operate in the following way. When a guide-vane is restricted in its travel during a closing movement of the wicket gate, the cup springs will be compressed as the compressive force exceeds an allowed level. The link halves will then turn towards each other.

It is an object of the present invention to provide a wicket gate for water turbines, which can handle the situation that an obstruction restricts the closing of the wicket gate. It is also an object of the invention to provide a wicket gate that after a guide-vane having been restricted during closing, can be brought by itself to return to its original condition, without shutting down the turbine. It is furthermore an object of the invention to diminish or preferably eliminate the risk of avalanche-closing.

### ACCOUNT OF THE INVENTION

The invention relates to a wicket gate for a water turbine. The wicket gate according to the invention comprises a regulating ring and at least one guide-vane having a crank (lever) fixedly connected to the guide-vane. A two-part link is arranged between the crank and the regulating ring, which two-part link in one end thereof is mounted to the crank of the guide-vane, and in its other end is rotatably mounted to the regulating ring. A toggle joint on the two-part link connects a first part of the link with a second part of the link. The toggle joint is provided with biased friction members that are able to transfer a torque of up to a predetermined level, but that slip if that level is exceeded, whereby the link will yield.

In an advantageous embodiment of the invention, the wicket gate comprises a fixedly arranged stop lug arranged to co-act with the crank of the guide-vane, in order to limit the swinging of the crank as the guide-vane is pivoted to an open position for the guide-vane.

In an advantageous embodiment, the toggle joint comprises a block that is rigidly connected to a first part of the two-part link. The block is provided with a pin on which a second part of the two-part link can be mounted. A cap is arranged to cover the portion of the second link part mounted on the pin, and said friction members comprise a first friction disc arranged between the block and the second link part, and a second friction disc arranged between the second link part and the cap. Thus, the toggle joint is arranged to clamp the second link part between the cap and the block, by a predetermined force.

The pin of the toggle joint can suitably be separated from the second link part by a spacer ring of low friction material.

In a preferred embodiment, the toggle joint can be protected by outer sealings against penetration of moist.

Furthermore, the toggle joint can be provided with an indicator that signals as a toggle joint yields by exceeding of the predetermined torque level.

### BRIEF DESCRIPTION OF THE DRAWINGS

Fig. 1 shows, in cross-section, a water turbine provided with a wicket gate.
Fig. 2 shows a section of the wicket gate according to the invention, in a view from above.
Fig. 3 shows, in cross-section, a two-part friction link to be used in the wicket gate.
Fig. 4 shows the friction link according to Fig. 3, as seen from above.
Fig. 5 shows the same section as in Fig. 2, in which an obstruction has been caught between two guide-vanes.
Fig. 6 shows the course during closing, when one of the guide-vanes is restricted in its travel by an obstruction.
Fig. 7 shows opening of the wicket gate after removal of the obstruction.

### DETAILED DESCRIPTION OF THE INVENTION

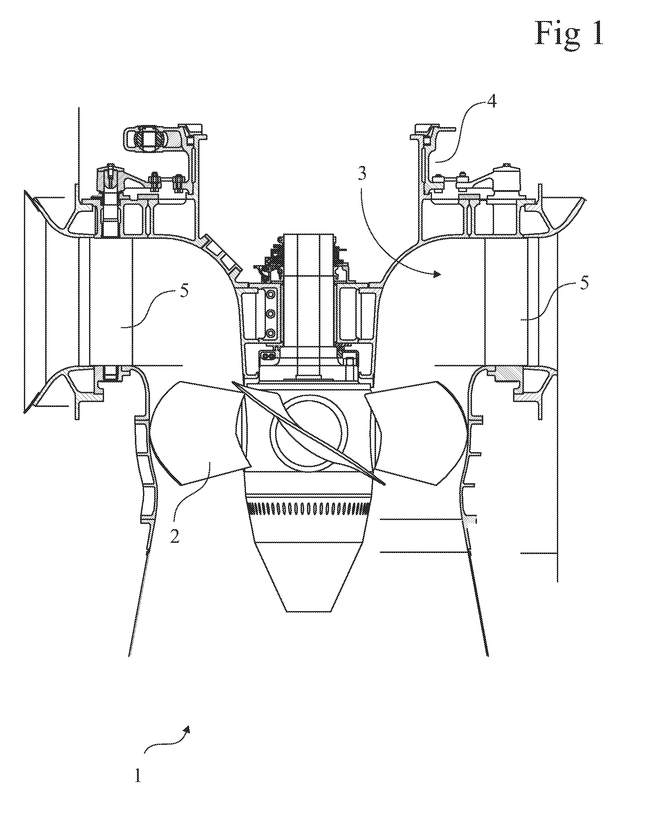

Referring to Fig. 1, a water turbine 1 having turbine vanes 2 is shown in cross-section. The water turbine 1 is provided with a wicket gate 3 that controls the water flow to the turbine 1. The wicket gate 3 comprises a revolving regulating ring 4 and at least one guide-vane 5. Preferably, the wicket gate is provided with a plurality of guide-vanes 5. The guide-vane 5 can be pivoted about an axis of rotation V. The guide-vane has a crank or lever 6 that is fixedly attached to the guide-vane 5. By swinging the crank 6, the guide-vane 5 can be made to pivot about its axis of rotation V, between opened and closed positions for the guide-vane 5.

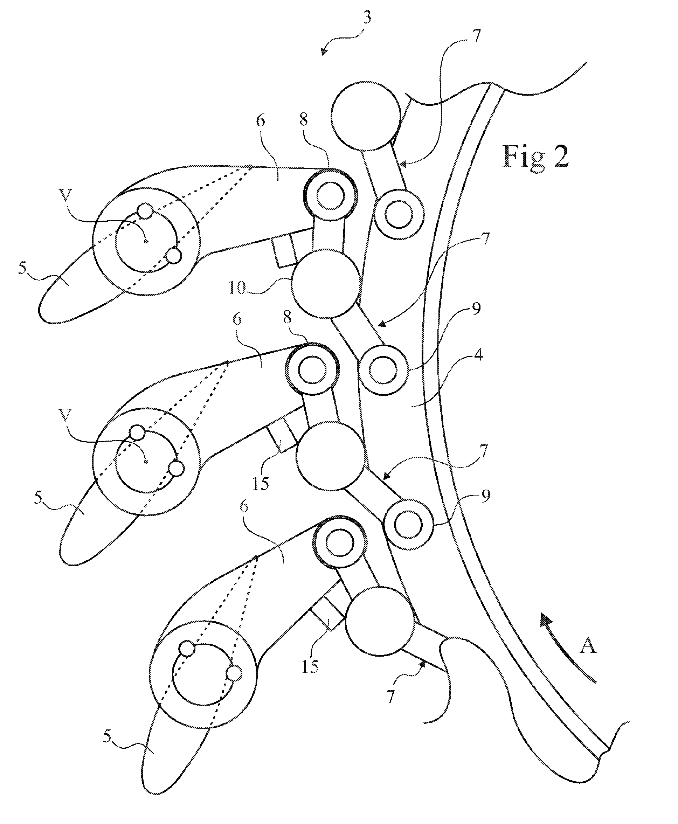

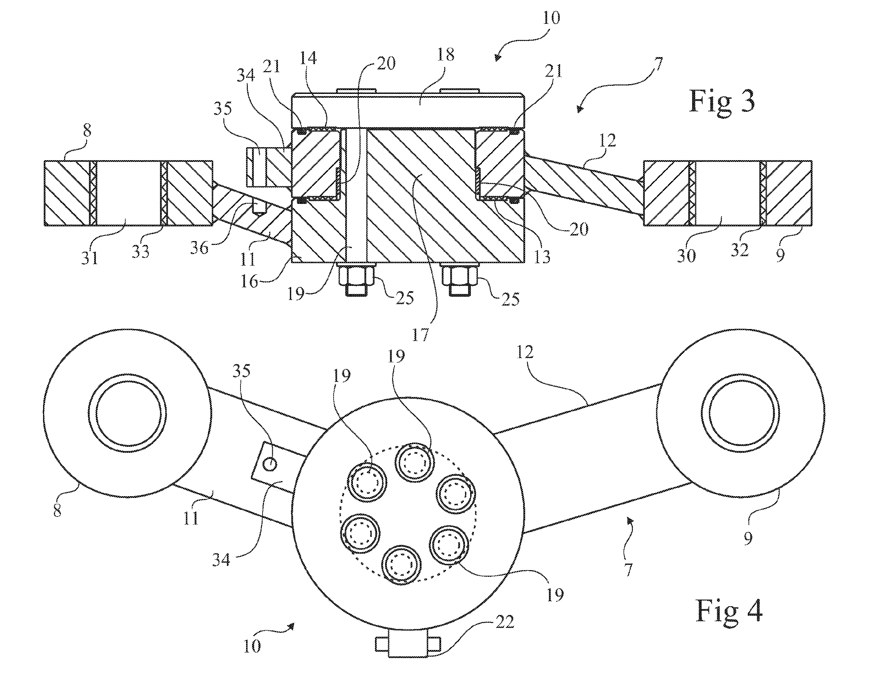

Between the crank 6 and the regulating ring 4, there is a two-part link 7 that in one end 8 thereof is rotatably mounted to the crank 6 of the guide-vane, and that in the other end 9 thereof is rotatably mounted to the regulating ring and thereby connects the regulating ring 4 with the guide-vane 5, so that the guide-vane 5 can be made to pivot by turning of the regulating ring 4. At the end 9 of the link 7 that is mounted to the regulating ring 4, the link 7 has a circular through hole 30 with a bushing 32 of low friction material. Thus, the link 7 can be mounted on a pin on the regulating ring 4. Alternatively, the link 7 can be provided with a pin that is rotatably mounted in a hole in the regulating ring 4. The link 7 is, in its other end 8, provided with a through hole 31 having a bushing 33 of low friction material. Thus, the link 7 can be rotatably mounted to the crank 6, suitably by a pin on the crank 6. Alternatively, the link 7 can have a pin that is rotatably mounted in a hole in the crank 6. Bushings 32, 33 can be made of bronze or a lubricating-free material e.g. It should be understood that the regulating ring 4 is connected to one or more operating devices, such as servo-motors. As is shown in Figs. 2-7, the two-part link 7 has a toggle joint 10 that connects a first part 11 of the link 7 with a second part 12 of the link 7. As is best shown in Fig. 3, the toggle joint 10 is provided with at least one biased friction member 13, 14 that can transfer a torque of up to a predetermined level, but that slips if that level is exceeded whereby the toggle joint 10 yields so that the link 7 yields.

According to a preferred embodiment, shown in Figs. 2 and 5-7, the wicket gate 3 can comprise a fixedly arranged stop lug 15 arranged to co-act with the crank 6 of the guide-vane, in order to limit the swinging of the crank 6 as the guide-vane 5 is pivoted to an open position for the guide-vane 5.

As is shown in Fig. 3 and 4, the toggle joint 10 may comprise a block 16 that is rigidly connected to a first part 11 of the two-part link 7, and provided with a pin 17 on which a second part 12 of the two-part link 7 (the friction link 7) can be mounted. The second part 12 of the friction link 7 can at its end be provided with a through hole, to surround the pin 17. Suitably, a cap 18 is arranged to cover the portion of the second link part 12 that is mounted on the pin 17. In a preferred embodiment, said friction members 13, 14 comprise a first friction disc 13 arranged between the block 16 and the second link part 12, and a second friction disc 14 arranged between the second link part 12 and the cap 18. Thus, the toggle joint 10 is arranged to clamp the second link part 12 between the cap 18 and the block 16, by a predetermined force. In Fig. 3, it is shown that the toggle joint 10 is provided with a number of through screws 19 that co-act with nuts 25. By tightening the nuts 25 on the screws 19, the friction discs 13, 14 can be clamped between the cap 18, the second link part 12 and the block 16. When the toggle joint 10 is subjected to a torque exceeding a predetermined value, the second link half 12 and the pin 17 are turned in relation to each other. A protrusion 34 may be arranged on the second link half 12. In the figures, the protrusion 34 is shown to have a through hole 35 for position indication by gauge. As the hole 35 is aligned with the hole 36 in the first link half 11, the link 7 is in its correct starting position. The friction discs 13, 14 may be made of steel, cast iron or nodular iron.

The pin of the toggle joint 10 is preferably separated from the second link part 12 by a spacer ring 20 of low friction material. The spacer ring 20 can be made of a lubricating-free bearing material. Suitably, there is a clearance of about 0.5 mm between the block 16 and the second link part 12.

In an advantageous embodiment, the toggle joint 10 can be protected from penetration of moist, by outer sealings 21.

Suitably, the toggle joint 10 is provided with an indicator 22 that signals as a toggle joint 10 yields by exceeding of the predetermined torque level. As soon as a friction link 7 yields by yielding of the toggle joint 10, a corresponding displacement will take place between an inductive gauge on the indicator 22 and an opposing iron core, whereby a signal is generated to the control mechanism of the turbine 1 in which the continuation of this sequence has been programmed. This may be signalling for continued operation or for restoration by going to the open position.

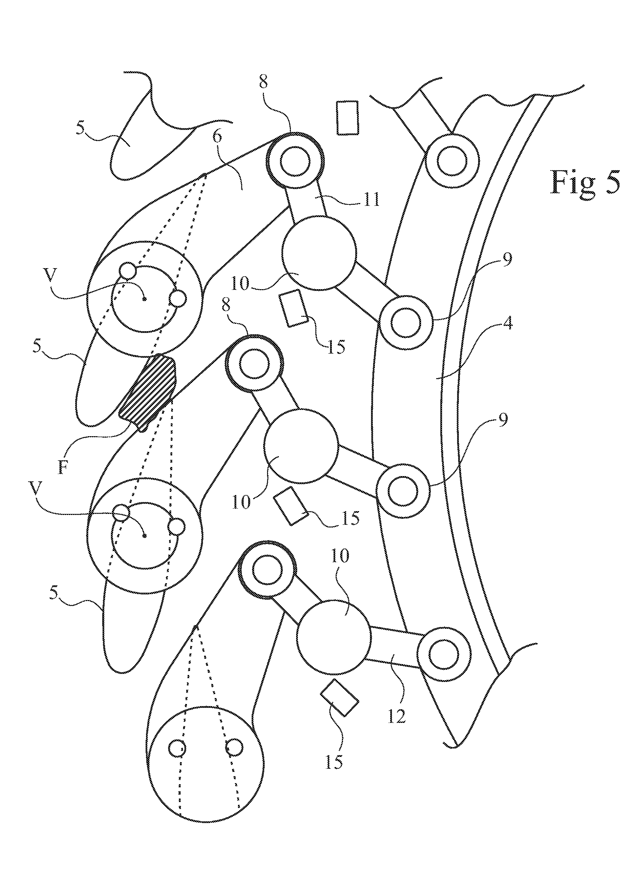

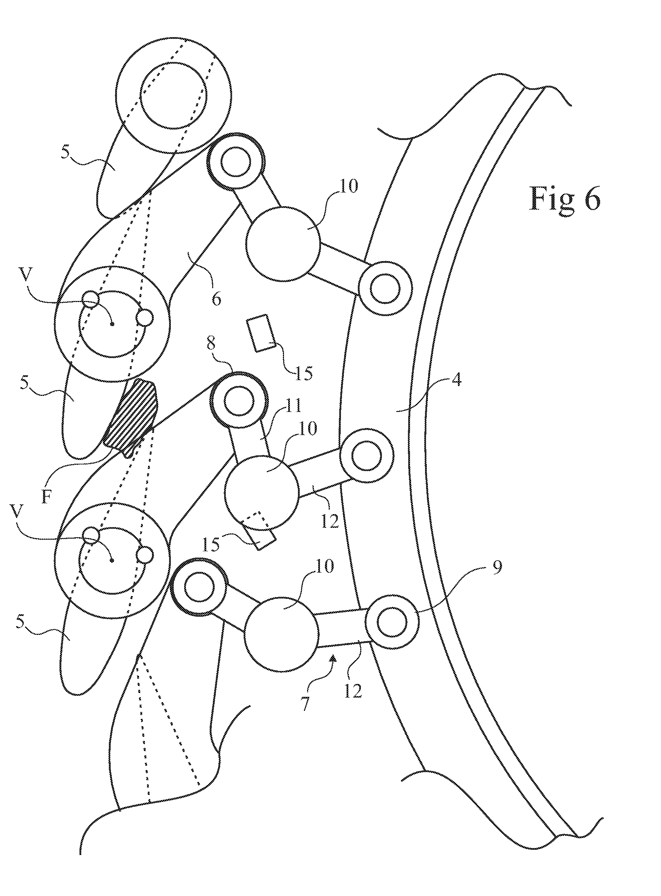

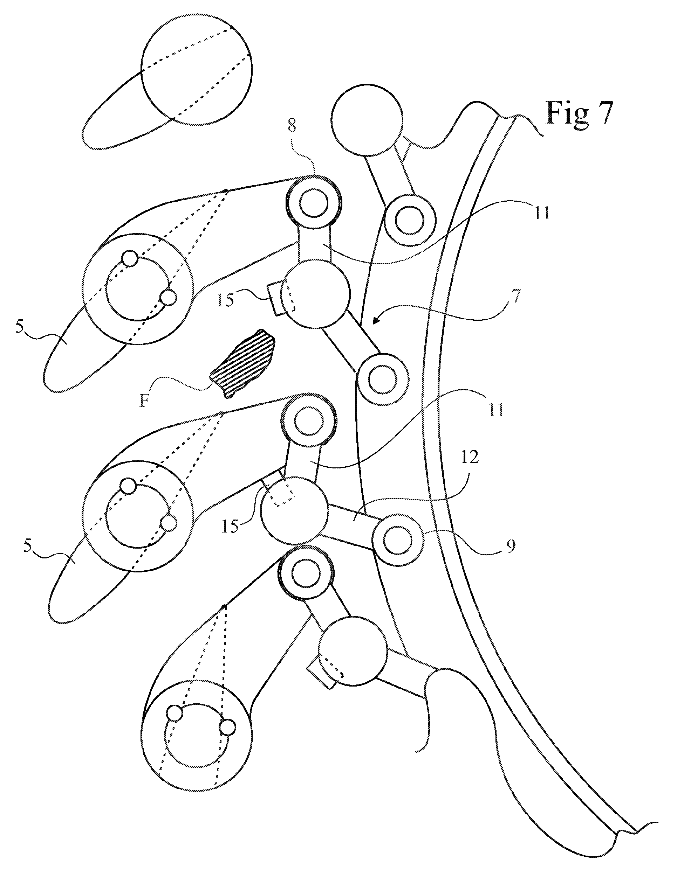

The wicket gate according to the invention operates in the following way. Fig. 2 shows an open position for the wicket gate 3. In this position, water may pass through the guide-vanes 5, and reach the turbine blades 2. If it is desired to close the wicket gate 3 in order to interrupt the water flow, the regulating ring 4 is turned clock-wise according to arrow A in Fig. 2. It is now referred to Fig. 5. Here it is shown how an obstruction F has been caught in the space between two guide-vanes 5. Hereby, the closing is restricted. At continued turning of the regulating ring, a slipping will occur at the friction discs 13, 14 as the load reaches a predetermined value. Then, the toggle joint 10 will yield. This position is shown in Fig 6, where the middle toggle joint 10 in Fig. 6 has yielded, and the two link parts 11 and 12 have moved towards each other. The other links and their toggle joints remain unaffected. Referring to Fig. 7, the course at opening will now be explained. At opening of the wicket gate, the regulating ring 4 is turned anti-clockwise. As mentioned above, the wicket gate 3 may in a preferred embodiment be provided with fixed stop lugs 15. At opening of the wicket gate, the crank 6 of the vane 5 that previously was restricted in its travel will reach its stop lug 15 before the other cranks or levers 6 reach their respective stop lugs 15. Then, the toggle joint 10 will again yield by slipping at the friction discs 13, 14. The link 7 will then return to its original shape. The wicket gate 3 will then return to the condition shown in Fig. 2.

By the invention, a wicket gate is provided that reliably can handle the problem of obstructions getting caught between guide-vanes. When using the stop lugs described above, the advantage is also attained that the wicket gate may be brought automatically to return to its original position. If the two-part link is provided with an indicator for indication of a deviant position, the advantage is attained that steps can be undertaken to correct a defective condition.

If the interior of the toggle joint is protected from moist by outer sealings, the advantage is attained that the toggle joint may operate correctly for a long time.

If the toggle joint is provided with a spacer ring of low friction material, the advantage is attained that seizing between the material of the second link arm and the block of the toggle joint, is avoided.

By the invention, the risk of avalanche-closing can be diminished or eliminated. The invention can easily be applied in existing wicket gates, by replacing existing breaking bolts or breaking links by a two-part link with friction discs according to the present invention. However, it should be understood that the invention not necessarily excludes the use of breaking links or breaking bolts. In preferred embodiments of the invention, the use of breaking links/breaking bolts is however avoided. If the use of breaking links or breaking bolts is avoided, the risk of avalanche-closing is diminished.

## Claims

1. A wicket gate for a water turbine (1), which wicket gate comprises:
a) a regulating ring (4),
b) at least one guide-vane (5) having a crank (6) fixedly connected with the guide-vane (5),
c) a two-part link (7) arranged between the crank (6) and the regulating ring (4), which two-part link in one end (8) thereof is mounted to the crank (6) of the guide-vane (5), and in its other end (9) is rotatably mounted to the regulating ring (4),
d) on the two-part link (7), a toggle joint (10) connecting a first part (11) of the link (7) with a second part (12) of the link (7), and which toggle joint (10) is provided with biased friction members (13, 14) that can transfer a torque of up to a predetermined level, but that slip if that level is exceeded, whereby the link (7) yields.

2. A wicket gate according to claim 1, **characterised in that** the wicket gate (3) comprises a fixedly arranged stop lug (15) arranged to co-act with the crank of the guide-vane (5), in order to limit the swinging of the crank (6) as the guide-vane (5) is pivoted to an open position for the guide-vane (5).

3. A wicket gate according to claim 1, **characterised in that** the toggle joint (10) comprises a block (16) that is rigidly connected to a first part (11) of the two-part link (7) and provided with a pin (17) on which a second part (12) of the two-part link (7) can be mounted, a cap (18) arranged to cover the portion of the second link part that is mounted on the pin (17), that said friction members (13, 14) comprise a first friction disc (13) arranged between the block (16) and the second link part, and a second friction disc (14) arranged between the second link part (12) and the cap (18), and that the toggle joint (10) is arranged to clamp the second link part (12) between the cap (18) and the block (16), by a predetermined force.

4. A wicket gate according to claim 3, **characterised in that** the pin (17) of the toggle joint (10) is separated from the second link part by a spacer ring (20) of low friction material.

5. A wicket gate according to claim 3 or 4, **characterised in that** the toggle joint (10) is protected from penetration of moist, by outer sealings (21).

6. A wicket gate according to claim 1, **characterised in that** the toggle joint (10) is provided with an indicator (22) that signals as a toggle joint (10) yields by exceeding of the predetermined torque level.
